# EUROPEAN PATENT SPECIFICATION

(11) **EP 2 090 121 B1**
(45) Date of publication and mention of the grant of the patent: **01.03.2017**
(21) Application number: 07848145.4
(22) Date of filing: 14.11.2007
(51) Int. Cl.: G06K 7/10, H04M 1/725, H04M 1/247, H04M 1/2755

(54) **METHOD AND ARRANGEMENT FOR COMMUNICATING BY MEANS OF IDENTIFIERS ASSOCIATED WITH IMAGES**
VERFAHREN UND ANORDNUNG ZUM KOMMUNIZIEREN MITTELS MIT BILDERN ASSOZIIERTER KENNUNGEN
PROCÉDÉ ET SYSTÈME DE COMMUNICATION AU MOYEN D'IDENTIFICATEURS ASSOCIÉS À DES IMAGES

(30) Priority: 15.11.2006 FI 20061000
(43) Date of publication of application: 19.08.2009
(73) Proprietor: Medixine Oy, 02600 Espoo (FI)
(72) Inventor: JOKINEN, Tapio, 02100 Espoo (FI); LINDMAN, Pontus, 02130 Espoo (FI)
(74) Representative: Berggren Oy, Helsinki & Oulu
(86) International application number: PCT/FI2007/000276
(87) International publication number: WO 2008/059103

(56) References cited:
- EP-A1- 1 575 323
- EP-A1- 1 843 615
- WO-A1-99/17230
- WO-A1-99/17230
- WO-A1-2004/021259
- WO-A1-2004/021259
- WO-A2-2006/031333
- WO-A2-2006/031333
- US-A1- 2004 002 305
- US-A1- 2004 002 305

## Description

The invention relates to a method and an arrangement for communicating by means of identifiers. In particular, the invention relates to communication by means of predetermined identifiers that are associated with images so that the user (the one who communicates) does not need to write a message or the like, when communicating.

The mechanical use of modern communications media (the dexterity) can be very difficult, even impossible to many, such as old people, those with limited capabilities of movement, or those suffering from certain illnesses because of the weakening of the path of hands and/or fingers, a severe Parkinson's disease or rheumatism, among others. Typically, such people have great difficulties in writing text messages, for example, or even punching a desired telephone number on the small keys of a mobile station. It is not uncommon that these people also suffer from other illnesses, such as Alzheimer's disease, whereby communication between a doctor and a patient or the patient and a relative is of primary importance in order to remember or to remind the patient of taking a medicine, among others. Furthermore, there are people, who for some other reason are not very well accus-tomed to using the modern communications media, such as mobile stations or computers.

The prior art teaches a solution, wherein an RFID tag is arranged on an image board, next to each image, the images including, for example, the numbers from 0 to 9, an RFID tag that comprises a specific identifier corresponding to each number; e.g., RFID tag RF#0 corresponds to number 0, whereby when taking a mobile station provided with an RFID reader next to the number in question, the RFID reader reads the identifier RF#0 of the RFID tag that corresponds to number 0. The function in question corresponds to punching the digit key 0 on the keyboard of the mobile station. In this way, the user can punch in a telephone number, for example, by moving their mobile station, which is provided with the RFID reader, alternatively to each number.

Furthermore, the prior art teaches, for example, how to directly provide the image of a home on the image board with the telephone number of the home, whereby when taking the mobile station provided with the RFID reader on top of the RFID tag corresponding to the image of home, the mobile station opens a call between the mobile station in question and the means of communication that corresponds to the telephone number programmed into the RFID tag.

For example US 2004/002305 A1 discloses a solution for effecting network connections using transponders (RFID tags), where a visual representation (image) corresponding to a function to be performed is associated with each of the tags. The image may be e.g. as a "first aid" symbol, which is associated with the communication function to "call for nursing care." The tag includes at least some of the information required to initiate and/or execute the call for the nursing care, such as the recipient's telephone number or the message content itself, and/or the SMS destination address.

EP 1575323 A1 discloses an emergency sensing device that transmits a simple predefined message that triggers a specific application of a mobile phone which implements a whole logic of the emergency call service.

WO 2006/031333 A2 discloses a solution, where tags are linked to individuals and used to initiate an action to be executed in a nearby wireless communication device. The tags each have an associated ID value, which are used to initiate an action in the wireless communication device. The particular ID value could be based upon the actions to be executed or the ID value may reference a data structure linking the ID value with the appropriate actions to be initiated. The data structure could be maintained in a server accessible via the network. Additionally or alternatively, a copy of the full or an abridged version of the data structure could be maintained in the corresponding wireless communication device.

In addition the controller of the tag is additionally coupled to a storage element including an ID value, which could be hard coded and/or stored in a memory circuit. The ID value may be fixed, where any modification of the associated actions to be initiated in a nearby wireless communication device can occur as part of changes to the data stored in a record associated with the ID value in a corresponding data structure, which can be stored on a server or in the wireless communication device. In other embodiments, it may be possible to change the ID value.

WO 2004/021259 A1 discloses a solution for generating a multimedia message, where an RFID-transponder tag is stimulated to emit a response signal, which is received. The tag information is associated with a multimedia object. The transmission of a multimedia message is initiated based upon the tag information. The tag information is a direct link to the multimedia object, which is stored in a database, the database being located either in a portable device, in a node or in an internet server.

WO 99/17230 A1 discloses a message information system, where objects are associated with identifiers. A first database stores object information relating to the objects such that the object information relating to each object is retrievable by means of its identifier.

Furthermore EP 1843615 A1 discloses a system for contacting a destination device via first and second intermediate devices in response to information from a source device, where the source device stores and transmits the information having an address code and a subscriber code. The first intermediate device receives the address code and the subscriber code and supplies the subscriber code to a second network interface. The second intermediate device receives the subscriber code and contacts a fourth network interface of the destination device.

However, there are certain problems with the prior art, such as the limitations caused by the limited space of the RFID tags, and the updateability of the functions related to the RFID tags, as well as the confirmation of the function that is the object of the performance. For example, if there are several images on the image board, such as home, hospital, job, among others, and RFID tags comprising the telephone numbers related to the images in question side by side, the user cannot always be certain of which RFID tag of which image the RFID reader of the mobile station has read. In addition, if the telephone number of the job changes, for example, a new RFID tag provided with the number of the new job must be replaced on the image board, or at least program the previous RFID tag with the new number. A solution is also known from the prior art, wherein a telephone number, such as the number of home health care information, can be programmed into the reader software of the RFID tag included in the mobile station by hand by an expert. However, as programming the RFID tags can seldom be successfully performed at home, the solutions mentioned above are time-consuming and laborious. Furthermore, programming the telephone number into the reader software of the RFID tag of the mobile station is also very laborious, because in the event of the number of the home health care information changing, for example, it would be necessary to separately go and update the software of each user of the home health care services.

The object of the present invention is to eliminate or at least reduce the disadvantages related to the prior art, e.g., by enabling the updating and use of the same RFID tags without reprogramming the tags in the event of the functions related to the RFID tags changing. Another object is to implement a solution, by which the user can be certain of which RFID tag of the image panel the mobile station, the PDA device, or another data terminal, the user has selected, especially in a case where several images and the associated RFID tags are located very near to each other.

The objects of the invention are achieved by reading, preferably based on local area communication, the identifier associated with the image on the image panel, and delivering, by a data terminal, the individual message associated with the identifier to a server, wherein at least one specific function is attached to the message in question of the data terminal in question. After receiving the message, the server preferably carries out at least one function that corresponds to the message. Furthermore, the data terminal is arranged to display a symbol or an image, on the basis of which the user can confirm which image of the image panel was selected, and the identifier related to which image of the image panel was read.

The method according to the invention is characterized in that which is presented in the characterizing part of independent Claim 1 that relates to the method.

The system according to the invention is characterized in that which is presented in the characterizing part of independent Claim 5 that relates to the system.

The data terminal according to the invention is characterized in that which is presented in the characterizing part of independent Claim 8 that relates to the data terminal.

The server according to the invention is characterized in that which is presented in the characterizing part of independent Claim 10 that relates to the server.

The computer software product according to the invention, which is to be performed in the data terminal, is characterized in that which is presented in the characterizing part of independent Claim 12 that relates to the computer software product.

The computer software product according to the invention, which is to be performed by the server, is characterized in that which is presented in the characterizing part of independent Claim 14 that relates to the computer software product.

Some preferable embodiments of the invention are presented in the dependent claims.

According to an embodiment of the invention, the readable identifier that is related to the image on the image panel is an RFID tag, for example. Alternatively, the identifier can also be a barcode, or a symbol or a pattern that can be read by means of pattern recognition, a magnetic tape, and/or an optical code or another corresponding identifier, which is well-known by those skilled in the art and can preferably be read from a distance. In the identifier space of the user in question, the identifier is preferably individual, such as "RFID#13", whereby the said identifier can be distinguished from the other identifiers used by the user in question. In accordance with its properties, the identifier can either be placed behind the image on the image panel (e.g., RFID), next to the image (e.g., bar code) or among the image (e.g., optical code or an identifiable pattern or symbol).

According to an embodiment of the invention, after reading the identifier, a message related to the identifier is delivered from the data terminal to a server, such as the server of a telephone operator. The server preferably includes a private database or the like for each user, wherein specific functions correspond to the possible messages of the user in question, such as delivering a predetermined text message to a predetermined recipient, e.g., making in the database an entry of having taken the medicine, an emergency call or a call request, for example. Depending on the authority of the operator and/or the application in the data terminal, the function can also comprise making a telephone connection.

According to a further embodiment of the invention, an image array is also maintained on the server, wherein one image preferably corresponds to each message, which the data terminal in question has been arranged to deliver. According to an embodiment of the invention, when the identifier associated with the image on the image panel is read and the message associated with the identifier has been delivered by the user's data terminal to the server, the server retrieves the image that corresponds to the message in question and returns it as a return message to the data terminal, which delivered the message, to be displayed to the user. The image preferably depicts, as well as possible, the function corresponding to the message in question, which function the server has been arranged to perform. The image may be, for example, "Pill" corresponding to a specific message, which can be delivered by the data terminal in question. In that case, when the identifier of the image corresponding to the medication is read on the image panel, and the message related to the identifier is delivered by the user's data terminal to the server, the image corresponding to the message in question, i.e., in this case, "Pill", is preferably delivered from the server as a return message to be displayed to the user before performing the function related to the message in question, whereby the user can be confirmed of their selection. After this, the user may, for example, acknowledge their selection (however, the acknowledgement is an optional function and the message can also be delivered directly without the acknowledgement), whereafter the server carries out a function, such as delivering to a doctor or a party controlling the user's medication a message "Patient has taken medicine". The function can also consist of a series of functions.

Alternatively, the image array can be maintained in the user's data terminal, whereby the image corresponding to the message related to the identifier does not have to be separately retrieved / delivered each time from the server to the data terminal, whereby the system becomes faster and the amount of data to be transferred can be minimized. The images can be loaded to the user's terminal by any method according to the prior art, such as by means of a memory card, a data cable or a short range radio link, after which the image is preferably attached to a specific identifier, whereby when reading the said identifier, the terminal displays the image related to the identifier in question to the User and the user may be confirmed of their selection.

According to an embodiment of the invention, the images can be loaded from the server to the terminal in connection with the first use and store them in the terminal. For example, the user can determine that.the server attaches a specific image to a specific message, whereby when reading the identifier related to the specific image on the user's image panel and when delivering the message related to the identifier in question to the server for the first time, the server delivers the image attached to the message in question to the terminal, which in turn is arranged to store it in its memory devices and preferably attach it to the identifier corresponding to the message it delivered, after which the terminal can directly display the image in question, when the corresponding identifier is read the next time.

According to an embodiment, the user him/herself can load the desired images to the server and attach a specific image to a specific message. Alternatively, or in addition to the above, the server may contain what is called an image library, from where the user can select the images they desire, which are then attached to the messages.

Furthermore, according to an embodiment of the invention, when using RFID tags especially on image panels that contain a lot of images near to each other, the field of the RFID tag is limited and/or oriented in a narrow sector, whereby the RFID tag does not disturb the reader, when reading the adjacent RFID tag. The attenuation, limitation and/or orientation of the RFID tag field are provided by materials that attenuate the frequencies of the RFID tag, such as foil.

The images on the image panel can be printed images, for example, the identifier related to the image being arranged in connection with the same. For example, the image panel may comprise several pages, each one of them comprising at least one image and an associated identifier. According to an example of the invention, the image panel can be a folder (or a cluster) comprising several pages, images, and associated identifiers, such as RFID identifiers, whereby limiting the fields of the RFID identifiers in the manner described above plays a central role. The identifier may also be an identifier other than the RFID identifier, as disclosed herein.

The identifier can either be read directly by a reader located in the terminal, such as the RFID reader or, alternatively, the user may have a separate reader, such as an RFID pen, which communicates with the terminal by means of a short range radio link, such as Bluetooth or WLAN, for example.

According to a further embodiment of the invention, the server can be the user's own PC, for example, comprising software that simulates the terminal or, alternatively, a data terminal circuit, to which a separate reader, such as the RFID pen, can deliver the data of the identifier it has read. In that case, the data terminal circuit or the software simulating the data terminal delivers the message to the server section of the PC, which in turn carries out the function corresponding to the message or another function, such as delivering the image to the terminal and/or displaying it, as described herein in connection with the server functions.

The invention provides considerable advantages over the solutions according to the prior art, such as an easy updating, i.e., for example, the replaceability of the images and the functions without replacing the identifier related to the image, and also a confirmation that ensures the user of the selection they have made. Furthermore, it should be rioted that in the invention, the data of the identifier that was read (such as the code of the RFID identifier) is not delivered from the terminal to the server, but only the message related to the identifier, whereby no record of the identifiers (such as the codes of the RFID identifiers) needs to be kept in the server, which in turn reduces the complexity and the vulnerability of the system.

The method according to the invention can be used, for example, to monitor a patient taking their medicine, so that an image panel and a GSM telephone provided with an RFID reader are arranged in the home of a person suffering from Alzheimer's disease, for example. The image panel can include different ways of communication, such as monitoring the medication, call requests, and emergency calls. The one who uses the image panel can see them as images or symbols. For example, when the patient takes their daily medicine, they acknowledge having taken the medicine by placing the telephone on top of the board. At this stage, a relative or another party receives a message, when so desired, in their telephone, telling that the medicine has been taken. If the medicine has not been taken within a specific time window, for example, information will be sent to the relative or the other party, who will then remind the patient. A database of the patient taking their medicine and, when needed, also of other messages will automatically accumulate on the server or, alternatively, to the other party.

In the following, the preferred embodiments of the invention are described in detail with reference to the appended drawings, in which:
Fig. 1 A shows an exemplary method of initializing the system according to the invention according to an embodiment of the present invention,
Fig. 1B shows a first exemplary method of communication according to an embodiment of the present invention,
Fig. 1C shows a second exemplary method of communication according to an embodiment of the present invention,
Fig. 2 shows an exemplary system for communicating according to an embodiment of the present invention,
Fig. 3 shows an exemplary computer software product that is to be carried out by the data terminal for communication according to an embodiment of the present invention,
Fig. 4 shows an exemplary computer software product that is to be carried out by the server for communication according to an embodiment of the present invention,
Fig. 5 shows an exemplary database arrangement of identifiers and associated images and/or messages, which is maintained in the data terminal, and
Fig. 6 shows an exemplary database arrangement of messages and associated images and/or functions, which is maintained on the server.

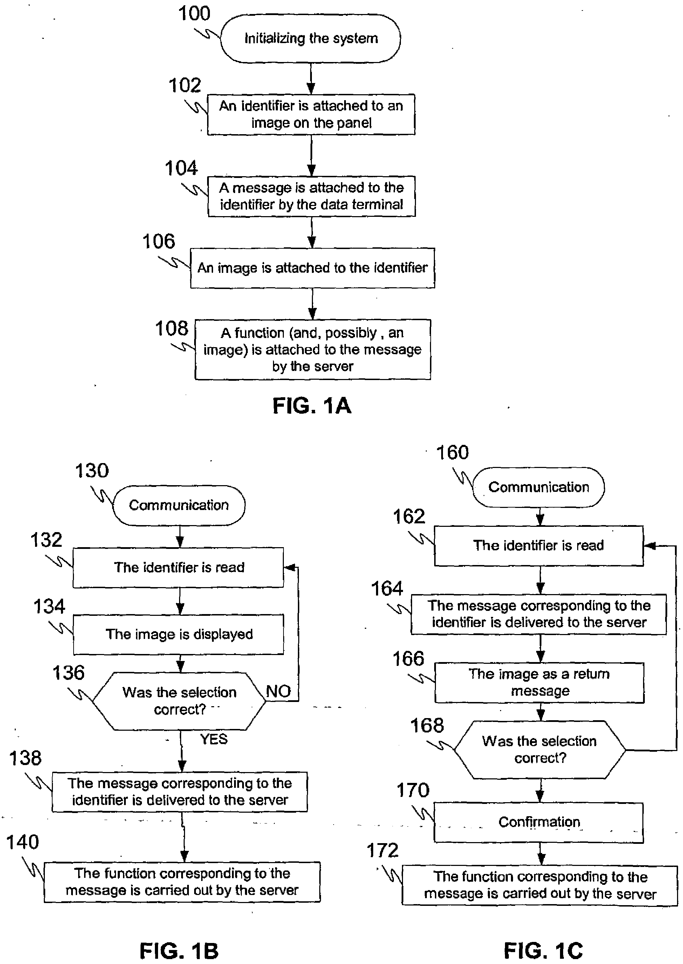

Fig. 1 A shows an exemplary method 100 of initializing the system according to the invention according to an embodiment of the present invention, whereby at stage 102, an identifier, such as an RFID tag, is attached to the image on the image panel, its identifier being RF#3, for example. The identifier can be attached to the image on the image panel, for example, by placing the identifier behind the image. At stage 104, a message, such as "Message #1" is attached to the identifier by the data terminal. Attaching the message can be carried out, for example, by first reading the identifier and then giving the said identifier a name, such as RF#3 = "Message #1" herein, by means of the terminal. A specific array of various identifiers and associated messages is thus formed in the terminal.

At stage 106, an image in the terminal is attached to the identifier, such as the image of a pill or a medicine, such as RF#3 = "Pill.jpg", wherein jpg is the format of the image. However, the stage 106 is optional and it can be carried out later on. At stage 108, a specific function is attached to the message "Message #1" by the server, such as "Message #1" = Send a text message "Patient has taken the pill" to a recipient X, wherein the recipient X is a predetermined recipient, such as the terminal of the relative. In connection with stage 108, an image can also be attached to the message by the server, especially, if it has not been attached to the identifier by the terminal already at stage 106, such as "Message #1" = "Pill.jpg". The server may contain an image bank, where the user can select the image they desire to the message or, alternatively, the image can be loaded to the server by any methods well-known to those skilled in the art, such as by the internet.

Now, when the user wants to change a function and/or an image, the user may, for example, print a new paper image on top of the RFID tag and define, in accordance with stages 106 or 108, a new image, which is displayed, when the identifier associated with the image on the image panel is read. In addition, the user can determine, according to stage 108, a new function by the server, such as "Message #1" = Call help! It is of primary importance to notice that when updating the new function, the readable identifier (such as the RFID tag) associated with the image on the image panel does not need to be replaced, changed or reprogrammed. When updating the functions and/or the image on the image panel, the message attached to the identifier by the terminal can also be replaced, according to stage 104.

It should also be noticed that the attachment of the image in connection with stage 106 and stage 108 is optional and the image can be attached later or, as described herein in connection with Figs. 1 B and 1C, for example.

Fig. 1B shows a first exemplary method 130 of communication according to an embodiment of the present invention, wherein at stage 132, the identifier associated with a specific image on the image panel, such as the identifier RF#3 of the RFID tag, is read. The identifier is read by means of a reader device, which can be separate from the data terminal or preferably integrated into the terminal.

At stage 134, the image attached to the identifier, such as the pill, is displayed by the terminal to the user. If the image corresponds to the image on the image panel (stage 136), the user having read the identifier associated to the same (or at least thought they read it), the message corresponding to the identifier (such as "Message #1") is delivered from the terminal to the server at stage 138, wherein at stage 140, the function attached to the message ("Message #1") that is delivered by the terminal in question, such as 'Send a text message "Patient has taken the pill" to recipient X', is searched and carried out. Otherwise, if a wrong image is displayed at stage 136, it is preferable to return to stage 132, whereby the user can read the identifier again.

Fig. 1C shows another exemplary method 160 of communication according to an embodiment of the present invention, wherein the identifier (such as RF#3) is read at stage 162 but the terminal does not yet have an image attached to the said identifier, i.e., for example, the optional stage 106 presented by Fig. 1A has not been performed in connection with the initialization of the system (however, stage 108 has been carried out). In that case, at stage 164, the message associated with the identifier (such as "Message #1") is delivered to the server, wherein at stage 168, the predetermined image corresponding to the message in question is searched and delivered at stage 166 as a return message to the terminal, which delivered the message, to be displayed to the user. If the image that is displayed does not correspond to the image the user thought they selected (stage 168), they return to stage 162 and an image on the image panel is reselected by reading the identifier associated with it. But if the image corresponds to the selection made by the user, the selection is confirmed at stage 170, for example, by delivering a message of confirmation from the terminal to the server, after which, at stage 172, the function attached to the message by the server is carried out.

However, it should be noticed that stage 136/168 (Figs. 1 B and 1 C) is characteristic of a specific embodiment, and the invention can preferably also be used so that, after displaying the image (stage 134/166), the message corresponding to the identifier is delivered to the server without a delay. According to an embodiment, in connection with stage 136/168, what is called a confirmation tag can be arranged on the image panel, whereby when displaying the image to the user at stage 136/138, the user can acknowledge their selection correctly by reading the confirmation tag on the image board.

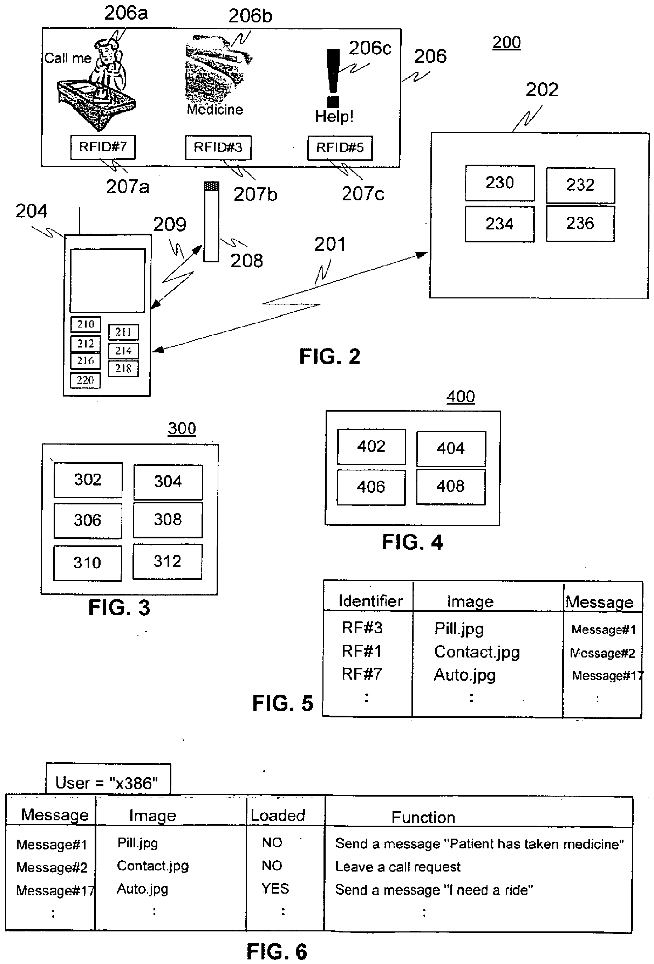

Fig. 2 shows an exemplary system 200 for communicating, according to an embodiment of the present invention, by means of predetermined identifiers associated with images, wherein the system 200 comprises a server 202 and a data terminal 204 that is in data communication 201 with the same. In connection with the terminal, the user has at their disposal an image panel 206, which can include several images 206a, 206b, and 206c, each one of them having an associated, unique identifier 207a, 207b, and 207c, such as the RFID tag comprising the identifier.

The data terminal 204, which can be, for example, a mobile station, according to an embodiment of the invention comprises a reader device 211 for reading the identifier 207a, 207b, 207c that is associated with the image on the image panel. The reader device may be, for example, an RFID reader, a barcode reader, a magnetic tape reader, or a reader formed by the camera of the mobile station and pattern recognition software. According to an embodiment, the reader device can also be a reader device 208 that is separate from the terminal, which, however, communicates with the terminal either in accordance with a wire or wireless communications method 209, such as via Bluetooth, for example.

Typically, the terminal also comprises a means 210 for attaching the message to the identifier, and a means 212 for displaying the image associated with the identifier to the user, and a means 214 for delivering the message associated with the identifier to the server. In addition, the terminal may include a means 216 for maintaining an image array so that at least one electric image is associated with at least one identifier 207a, 207b, 207c in the terminal, whereby when reading the identifier 207a, 207b, 207c, the terminal 204 is arranged to display the electric image associated with the said identifier 207a, 207b, 207c by the means 216 of the terminal and the display of the terminal.

Furthermore, the terminal 204 may include a means 218 for receiving at least one image from the server and storing it in connection with the delivery of the message, for example, and a means 220 for attaching the image to the identifier that corresponds to the corresponding message in question on the server.

Server 202, in turn, comprises a means 230 for receiving the message from the said terminal, and a means 232 for attaching a specific function to the message in question of the terminal in question, and a means 234 for carrying out the specific function after receiving the said message. The server can also comprise a means 236 for returning the image that corresponds to the message it received, as a return message, to the terminal that delivered the message to be displayed to the user.

Fig. 3 shows an exemplary computer software product 300 that is to be carried out by the terminal 204 for communicating according to an embodiment of the present invention, wherein the computer software product comprises a means 302 for processing the identifier associated with the image, such as receiving it from the reader devices and identifying the identifier, and a means 304 for attaching the message to the said identifier in the terminal. The computer software product also comprises a means 306 for delivering the said message by means of the said terminal to the server, wherein a specific function is associated with the message in question of the terminal in question, and wherein the said function is carried out.

Furthermore, the computer software product can also comprise a means 308 for maintaining an image array in the terminal so that at least one images is attached to at least one identifier, whereby when reading the identifier, the computer software product is arranged to display the image, which is associated with the identifier in question, by means of the terminal. The computer software product can also comprise a means 310 for receiving, in connection with the first use of the identifier, at least one image from the server and storing the said image, and a means 312 for attaching, in the terminal, the said image to the identifier corresponding to the message it delivered.

Fig. 4 shows an exemplary computer software product 400 that is to be carried out by the server 202 for communicating according to an embodiment of the present invention, wherein the computer software product comprises a means 402 for receiving a message from the said terminal, and a means 404 for attaching a specific function to the message in question of the terminal in question, and a means 406 for carrying out the said function after receiving the said message. The computer software product can also comprise a means 408 for returning the image that corresponds to the message it received, as a return message, to the terminal that delivered the message to be displayed to the user.

Fig. 5 shows an exemplary database arrangement 500 of the identifiers and the associated images and/or messages, which is maintained by the terminal and which shows, among others, how a specific image (such as the pill) is associated with a specific identifier (such as RF#3), which image is displayed to the user, when the identifier in question is read in relation to the image on the image panel. The same line also shows the message associated with the identifier in question (such as "Message #1"), which is delivered to the server, when the identifier (such as RF#3) associated with the message in question is read.

Fig. 6 shows an exemplary database arrangement 600 of the identifiers and the associated images and/or functions, which is maintained by the server and which shows, among others, how a specific image (such as the pill) is associated with a specific message (such as "Message #1"), the image being loaded to the user, if the Load column of the line in question contains YES. The same line also shows the function associated with the message in question (e.g., Send the message "Patient has taken the medicine" to recipient "X"), which is carried out, when the message in question (e.g., "Message #1") is received by the server.

Only certain embodiments of the solution according to the invention are shown above. Naturally, the principle according to the invention can be modified within the scope defined by the claims, for example, with respect to the details and the range of use of the implementation. In particular, the functions on the server may be most different, and all of them cannot be presented in this connection. In particular, it should thus be observed that the idea of the invention is that only the message, which is predetermined and corresponds to the identifier that has been read, is delivered from the terminal, not the identifier itself. In addition the data terminal may be for example a mobile station, a PDA device, a digital TV, an electronic circuit or software that is to be run in a computer, and the server may be for example the operator's server or the user's computer.

## Claims

1. A method (130, 160) of executing a function at a server (202), wherein a readable identifier (207a) associated with an image (206a) is read (134), the identifier being for example an RFID identifier, a barcode, a symbol readable by means of pattern recognition, a magnetic tape and/or an optical code, and **characterized in that** in the method comprises
- delivering (138) a message associated with said identifier in a data terminal (204) to the server (202) from said data terminal, wherein at the server at least one specific function is associated with the delivered message, and
- carrying out (140) said at least one function by the server based on said received message.

2. The method of claim 1, wherein the function carried out by the server (202) comprises delivering a predetermined message to a predetermined recipient, making an entry in a database, delivering a contact request to the recipient, opening a call contact between the data terminal and the recipient's terminal, or delivering an emergency call.

3. A method according to any of the preceding claims, wherein when delivering the message associated with the identifier to the server, the server returns (166) the image corresponding to the said message as a return message to the data terminal which delivered the message, to be displayed to the user.

4. A method according to any of the preceding claims, wherein an image array is maintained in the user's data terminal (204) so that at least one image has been attached to at least one identifier, whereby when reading the identifier, the data terminal displays the image associated with the said identifier, or wherein at least one image is loaded from the server (202) to the data terminal in connection with a first use and is stored in the data terminal so that the data terminal associates the said image with the identifier that corresponds to the message it delivered.

5. A system (200) for executing a function at a server (202), wherein the system comprises said server (202) and a data terminal (204) that is in communication with the same, and a readable identifier (207a) associated with an image (206a), the identifier being for example an RFID identifier, a barcode, a symbol readable by means of pattern recognition, a magnetic tape and/or an optical code, and **characterized in that**
- a message associated with said identifier in the data terminal (204) is arranged to be delivered from the data terminal (204) to the server (202), wherein at the server (202) at least one specific function is arranged to be associated to the delivered message and
- the server (202) is arranged to carry out (140) said at least one function based on said received message.

6. A system according to Claim 5, wherein after the server (202) has received the message associated with the identifier, the server is arranged to return (166) the image corresponding to the delivered message as a return message to the data terminal (204) that delivered the message, to be displayed to the user.

7. A system according to any of Claims 5 or 6, wherein the data terminal (204) is arranged to maintain an image array so that at least one image is attached to at least one identifier, whereby when reading the identifier, the data terminal is arranged to display the image associated with the said identifier, or wherein at least one image is arranged to be loaded from the server to the data terminal in connection with a first use, and to be stored in the data terminal, whereby the data terminal is arranged to attach the said image to the identifier corresponding to the message it delivered.

8. A data terminal (204) operating in conjunction with a server (202) for executing a function wherein the data terminal is in communication with said server and arranged to read a readable identifier (207a) associated with an image (206a), the identifier being for example an RFID identifier, a barcode, a symbol readable by means of pattern recognition, a magnetic tape and/or an optical code, and **characterized in that**
- the data terminal (204) is arranged to deliver a message associated with said identifier in said data terminal (204) to the server (202), wherein at the server at least one specific function is arranged to be associated to the delivered message, and
- the server (202) is arranged to carry out (140) said at least one function based on said received message.

9. A data terminal according to Claim 8, wherein the data terminal (204) is arranged to maintain an image array so that at least one image is attached to at least one identifier, whereby when reading the identifier, the data terminal is arranged to display the image associated with the said identifier, or wherein the data terminal is arranged to receive at least one image from the server and to store the said image, whereby the data terminal is also arranged to attach the said image to the identifier corresponding to the message it delivered.

10. A server (202) for executing a function, said server being in communication with a data terminal (204) arranged to read readable identifier (207a) associated with an image (206a), the identifier being for example an RFID identifier, a barcode, a symbol readable by means of pattern recognition, a magnetic tape and/or an optical code, and **characterized in that**
- the server (202) is arranged to receive a message associated with said identifier in said data terminal (204) from the said data terminal, and wherein at the server (202) at least one specific function is arranged to be associated to the delivered message, and
- the server (202) is arranged to carry out (140) said at least one function based on said received message.

11. A server according to Claim 10, wherein after the server (202) has received the message associated with the identifier, the server is arranged to return (166) the image that corresponds to the delivered message as a return message to the data terminal that delivered the messagee, to be displayed to the user.

12. A computer software product (300) that is arranged to be executed in a data terminal (204) for executing a function at a server (202) that is arranged to process a readable identifier (207a) associated with an image (206a), the identifier being for example an RFID identifier, a barcode, a symbol readable by means of pattern recognition, a magnetic tape and/or an optical code, and **characterized in that**
the computer software product is further arranged when executed in the data terminal (204), to cause the data terminal (204) to deliver a message associated with said identifier in said data terminal (204) to a server (202),
wherein at the server at least one specific function is associated with the delivered message, and wherein at the server (202) the said at least one function is carried out (140) based on said received message.

13. A computer software product according to Claim 12, wherein the computer software product is arranged to cause the data terminal (204) to maintain an image array in the data terminal (204) so that at least one image is attached to at least one identifier whereby when reading the identifier, the computer software product is arranged to cause the data terminal (204) to display the image associated with the said identifier , or wherein the computer software product is arranged to cause the data terminal (204) to receive, in connection with a first use of the identifier, at least one image from the server and to store the said image, whereby the computer software product is also arranged to cause the data terminal (204) to attach the said image to the identifier corresponding to the message it delivered.

14. A computer software product (400) that is arranged to be executed in a server for executing a function at said server (202), the server being arranged to be in communication with a data terminal (204) that is arranged to read a readable identifier (207a) associated with an image (206a), the identifier being for example an RFID identifier, a barcode, a symbol readable by means of pattern recognition, a magnetic tape and/or an optical code, and **characterized in that**
- said computer software product is further arranged, when executed in the server (202), to cause the server (202) to receive a message associated with said identifier in said data terminal (204) from the said data terminal and also to associate at least one specific function to the delivered message, and
- the computer software product is also arranged to cause the server (202) to carry out (140) said at least one function based on said received message.

15. A computer software product according to Claim 14, wherein after the server (202) has received the message associated with the identifier, the computer software product is arranged to cause the server (202) to return (166) the image corresponding to the delivered message as a return message to the data terminal (204) which delivered the message, to be displayed to the user.

## Patentansprüche

1. Verfahren (130, 160) zur Ausführung einer Funktion an einem Server (202), wobei eine lesbare Kennung (207a), die mit einem Bild (206a) assoziiert ist, gelesen wird (134), wobei die Kennung zum Beispiel eine RFID-Kennung, ein Barcode, ein durch eine Mustererkennung lesbares Symbol, ein Magnetband- und/oder ein optischer Code ist, und **dadurch gekennzeichnet, dass** das Verfahren Folgendes umfasst:
- Liefern (138) einer Nachricht, die in einem Datenterminal (204) mit der Kennung assoziiert ist, von dem Datenterminal an den Server (202), wobei an dem Server zumindest eine bestimmte Funktion mit der gelieferten Nachricht assoziiert ist, und
- Durchführen (140) der mindestens einen Funktion durch den Server auf Basis der erhaltenen Nachricht.

2. Verfahren nach Anspruch 1, wobei die Funktion, die durch den Server (202) durchgeführt wird, das Liefern einer vorherbestimmten Nachricht an einen vorherbestimmten Empfänger, das Vornehmen eines Eintrags in einer Datenbank, das Liefern einer Kontaktanfrage an den Empfänger, das Öffnen eines Anrufkontakts zwischen dem Datenterminal und dem Endgerät des Empfängers, oder das Liefern eines Notrufs umfasst.

3. Verfahren nach einem der vorhergehenden Ansprüche, wobei der Server bei der Lieferung der mit der Kennung assoziierten Nachricht an den Server das Bild, das der Nachricht entspricht, als Rückmeldung an das Datenterminal, das die Nachricht geliefert hat, zurücksendet (166), damit es für den Benutzer dargestellt wird.

4. Verfahren nach einem der vorhergehenden Ansprüche, wobei in dem Datenterminal (204) des Benutzers ein Bild-Array so unterhalten wird, dass mindestens ein Bild mit mindestens einer Kennung verbunden ist, wobei das Datenterminal beim Lesen der Kennung das Bild, das mit der Kennung assoziiert ist, darstellt, oder wobei in Verbindung mit einer ersten Verwendung mindestens ein Bild von dem Server (202) in das Datenterminal geladen wird und so in dem Datenterminal gespeichert wird, dass das Datenterminal das genannte Bild mit der Kennung, das der von ihm gelieferten Nachricht entspricht, assoziiert.

5. System (200) zur Ausführung einer Funktion an einem Server (202), wobei das System den Server (202) und ein Datenterminal (204), das damit in Kommunikation steht, und eine lesbare Kennung (207a), die mit einem Bild (206a) assoziiert ist, umfasst, wobei die Kennung zum Beispiel eine RFID-Kennung, ein Barcode, ein durch eine Mustererkennung lesbares Symbol, ein Magnetband- und/oder ein optischer Code ist, und **dadurch gekennzeichnet, dass**
- eine Nachricht, die in dem Datenterminal (204) mit der Kennung assoziiert ist, so eingerichtet ist, dass sie von dem Datenterminal (204) an den Server (202) geliefert wird, wobei an dem Server (202) mindestens eine bestimmte Funktion so eingerichtet ist, dass sie mit der gelieferten Nachricht assoziiert wird, und
- der Server (202) so eingerichtet ist, dass er die mindestens eine Funktion auf Basis der erhaltenen Nachricht durchführt (140).

6. System nach Anspruch 5, wobei der Server nach dem Erhalt der mit der Kennung assoziierten Nachricht durch den Server (202) so eingerichtet ist, dass er das Bild, das der gelieferten Nachricht entspricht, als Rückmeldung an das Datenterminal (204), das die Nachricht geliefert hat, zurücksendet (166), damit es für den Benutzer dargestellt wird.

7. System nach einem der Ansprüche 5 oder 6, wobei das Datenterminal (204) so eingerichtet ist, dass es ein Bild-Array so unterhält, dass mindestens ein Bild mit mindestens einer Kennung verbunden ist, wobei das Datenterminal, wenn es die Kennung liest, so eingerichtet ist, dass es das mit der Kennung assoziierte Bild darstellt, oder wobei mindestens ein Bild so eingerichtet ist, dass es in Verbindung mit einer ersten Verwendung von dem Server in das Datenterminal geladen wird und in dem Datenterminal gespeichert wird, wobei das Datenterminal so eingerichtet ist, dass es das Bild mit der Kennung, die der von ihm gelieferten Nachricht entspricht, verbindet.

8. Datenterminal (204), das in Verbindung mit einem Server (202) zur Ausführung einer Funktion arbeitet, wobei das Datenterminal in einer Kommunikation mit dem Server steht und so eingerichtet ist, dass es eine lesbare Kennung (207a), die mit einem Bild (206a) assoziiert ist, liest, wobei die Kennung zum Beispiel eine RFID-Kennung, ein Barcode, ein durch eine Mustererkennung lesbares Symbol, ein Magnetband- und/oder ein optischer Code ist, und **dadurch gekennzeichnet, dass**
- das Datenterminal (204) so eingerichtet ist, dass es eine Nachricht, die in dem Datenterminal (204) mit der Kennung assoziiert ist, an den Server (202) liefert, wobei an dem Server mindestens eine bestimmte Funktion so eingerichtet ist, dass sie mit der gelieferten Nachricht assoziiert wird, und
- der Server (202) so eingerichtet ist, dass er die mindestens eine Funktion auf Basis der erhaltenen Nachricht durchführt (140).

9. Datenterminal nach Anspruch 8, wobei das Datenterminal (204) so eingerichtet ist, dass es ein Bild-Array so unterhält, dass mindestens ein Bild mit mindestens einer Kennung verbunden ist, wobei das Datenterminal, wenn es die Kennung liest, so eingerichtet ist, dass es das mit der Kennung assoziierte Bild darstellt, oder wobei das Datenterminal so eingerichtet ist, dass es mindestens ein Bild von dem Server erhält und das Bild speichert, wodurch das Datenterminal auch so eingerichtet ist, dass es das Bild mit der Kennung, die der von ihm gelieferten Nachricht entspricht, verbindet.

10. Server (202) zur Ausführung einer Funktion, wobei der Server in einer Kommunikation mit einem Datenterminal (204) steht, das so eingerichtet ist, dass es eine lesbare Kennung (207a), die mit einem Bild (206a) assoziiert ist, liest, wobei die Kennung zum Beispiel eine RFID-Kennung, ein Barcode, ein durch eine Mustererkennung lesbares Symbol, ein Magnetband- und/oder ein optischer Code ist, und **dadurch gekennzeichnet, dass**
- der Server (202) so eingerichtet ist, dass er von dem Datenterminal eine Nachricht, die in dem Datenterminal (204) mit einer Kennung assoziiert ist, erhält, und wobei an dem Server (202) mindestens eine bestimmte Funktion so eingerichtet ist, dass sie mit der gelieferten Nachricht assoziiert wird, und
- der Server (202) so eingerichtet ist, dass er die mindestens eine Funktion auf Basis der erhaltenen Nachricht durchführt (140).

11. Server nach Anspruch 10, wobei der Server nach dem Erhalt der mit der Kennung assoziierten Nachricht durch den Server (202) so eingerichtet ist, dass er das Bild, das der gelieferten Nachricht entspricht, als Rückmeldung an das Datenterminal, das die Nachricht geliefert hat, zurücksendet (166), damit es für den Benutzer dargestellt wird.

12. Computersoftwareprodukt (300) das so eingerichtet ist, dass es in einem Datenterminal (204) ausgeführt wird, um an einem Server (202) eine Funktion auszuführen, der so eingerichtet ist, dass er eine lesbare Kennung (207a), die mit einem Bild (206a) assoziiert ist, verarbeitet, wobei die Kennung zum Beispiel eine RFID-Kennung, ein Barcode, ein durch eine Mustererkennung lesbares Symbol, ein Magnetband- und/oder ein optischer Code ist, und **dadurch gekennzeichnet, dass**
- das Computersoftwareprodukt ferner so eingerichtet ist, dass es bei Ausführung in dem Datenterminal (204) das Datenterminal (204) dazu bringt, eine Nachricht, die in dem Datenterminal (204) mit der Kennung assoziiert ist, an einen Server (202) zu liefern, wobei an dem Server mindestens eine bestimmte Funktion mit der gelieferten Nachricht assoziiert ist, und wobei an dem Server (202) die mindestens eine Funktion auf Basis der erhaltenen Nachricht durchgeführt wird.

13. Computersoftwareprodukt nach Anspruch 12, wobei das Computersoftwareprodukt so eingerichtet ist, dass es das Datenterminal (204) dazu bringt, ein Bild-Array so in dem Datenterminal zu unterhalten, dass mindestens ein Bild mit mindestens einer Kennung verbunden ist, wobei das Computersoftwareprodukt beim Lesen der Kennung so eingerichtet ist, dass es das Datenterminal (204) dazu bringt, das Bild, das mit der genannten Kennung assoziiert ist, darzustellen, oder wobei das Computersoftwareprodukt so eingerichtet ist, dass es das Datenterminal (204) dazu bringt, in Verbindung mit einer ersten Verwendung der Kennung mindestens ein Bild von dem Server zu erhalten und das Bild zu speichern, wobei das Computersoftwareprodukt auch so eingerichtet ist, dass es das Datenterminal (204) dazu bringt, das Bild mit der Kennung, die der von ihm gelieferten Nachricht entspricht, zu verbinden.

14. Computersoftwareprodukt (400), das so eingerichtet ist, dass es in einem Server ausgeführt wird, um an dem Server (202) eine Funktion auszuführen, wobei der Server so eingerichtet ist, dass er mit einer Kommunikation mit einem Datenterminal (204) steht, das so eingerichtet ist, das es eine lesbare Kennung (207a), die mit einen Bild (206a) assoziiert ist, liest, wobei die Kennung zum Beispiel eine RFID-Kennung, ein Barcode, ein durch eine Mustererkennung lesbares Symbol, ein Magnetband- und/oder ein optischer Code ist, und **dadurch gekennzeichnet, dass**
- das Computersoftwareprodukt ferner so eingerichtet ist, dass es bei Ausführung in dem Server (202) den Server (202) dazu bringt, eine Nachricht, die in dem Datenterminal (204) mit der Kennung assoziiert ist, von dem Datenterminal zu erhalten, und ferner zumindest eine bestimmte Funktion mit der gelieferten Nachricht zu assoziieren, und
- das Computersoftwareprodukt auch so eingerichtet ist, dass es den Server (202) dazu bringt, die mindestens eine Funktion auf Basis der erhaltenen Nachricht durchzuführen.

15. Computersoftwareprodukt nach Anspruch 14, wobei das Computersoftwareprodukt nach dem Erhalt der Nachricht, die mit der Kennung assoziiert ist, durch den Server (202) so eingerichtet ist, dass es den Server (202) dazu bringt, das Bild, das der gelieferten Nachricht entspricht, als Rückmeldung an das Datenterminal (204), das die Nachricht geliefert hat, zurückzusenden (166), damit es für den Benutzer dargestellt wird.

## Revendications

1. Procédé (130, 160) d'exécution d'une fonction au niveau d'un serveur (202), dans lequel un identificateur lisible (207a) associé à une image (206a) est lu (134), l'identificateur étant par exemple un identificateur RFID, un code-à-barres, un symbole lisible au moyen d'une reconnaissance de motif, d'une bande magnétique et/ou d'un code optique, et **caractérisé en ce que** le procédé comprend :
- la délivrance (138) d'un message associé audit identificateur dans un terminal de données (204) au serveur (202) par ledit terminal de données, dans lequel, au niveau du serveur, une fonction spécifique est associée au message délivré, et
- la réalisation de ladite au moins une fonction par le serveur sur la base dudit message reçu.

2. Procédé selon la revendication 1, dans lequel la fonction réalisée par le serveur (202) comprend la délivrance d'un message prédéterminé à un destinataire prédéterminé, la réalisation d'une entrée dans une base de données, la délivrance d'une demande de contact au destinataire, l'ouverture d'un contact d'appel entre le terminal de données et le terminal du destinataire, ou la délivrance d'un appel d'urgence.

3. Procédé selon l'une quelconque des revendications précédentes, dans lequel, lors de la délivrance du message associé à l'identificateur au serveur, le serveur renvoie (166) l'image correspondant audit message en tant que message de retour au terminal de données qui a délivré le message pour l'affichage pour l'utilisateur.

4. Procédé selon l'une quelconque des revendications précédentes, dans lequel une matrice d'image est maintenue dans le terminal de données (204) de l'utilisateur de manière à ce qu'au moins une image ait été attachée à au moins un identificateur, moyennant quoi, lors de la lecture de l'identificateur, le terminal de données affiche l'image associée audit identificateur, ou dans lequel au moins une image est chargée du serveur (202) sur le terminal de données en connexion avec une première utilisation et est stockée dans le terminal de données de façon à ce que le terminal de données associe ladite image à l'identificateur qui correspond au message qu'il a délivré.

5. Système (200) pour exécuter une fonction au niveau d'un serveur (202), dans lequel le système comprend ledit serveur (202) et un terminal de données (204) qui est en communication avec ce même, et un identificateur lisible (207a) associé à une image (206a), l'identificateur étant par exemple un identificateur RFID, un code-à-barres, un symbole lisible au moyen d'une reconnaissance de motif, d'une bande magnétique et/ou d'un code optique, et **caractérisé en ce que**
- un message associé audit identificateur dans le terminal de données (204) est étudié pour être délivré par le terminal de données (204) au serveur (202), dans lequel, au niveau du serveur (202), au moins une fonction spécifique est étudiée pour être associée au message délivré, et
- le serveur (202) étant étudié pour réaliser (140) ladite au moins une fonction sur la base dudit message reçu.

6. Système selon la revendication 5, dans lequel, une fois que le serveur (202) a reçu le message associé à l'identificateur, le serveur est étudié pour renvoyer (166) l'image correspondant au message délivré en tant que message de retour au terminal de données (204) qui a délivré le message pour l'affichage pour l'utilisateur.

7. Système selon l'une quelconque des revendications 5 ou 6, dans lequel le terminal de données (204) est étudié pour maintenir une matrice d'image de façon à ce qu'au moins une image soit attachée à au moins un identificateur, moyennant quoi, lors de la lecture de l'identificateur, le terminal de données est étudié pour afficher l'image associée audit identificateur, ou dans lequel au moins une image est étudiée pour être chargée du serveur sur le terminal de données en connexion avec une première utilisation et pour être stockée dans le terminal de données, moyennant quoi le terminal de données est étudié pour attacher ladite image à l'identificateur correspondant au message qu'il a délivré.

8. Terminal de données (204) fonctionnant en conjonction avec un serveur (202) pour l'exécution d'une fonction, dans lequel le terminal de données est en communication avec ledit serveur et est étudié pour lire un identificateur lisible (207a) associé à une image (206a), l'identificateur étant par exemple un identificateur RFID, un code-à-barres, un symbole lisible au moyen d'une reconnaissance de motif, d'une bande magnétique et/ou d'un code optique, et **caractérisé en ce que**
- le terminal de données (204) est étudié pour délivrer un message associé audit identificateur dans ledit terminal de données (204) au serveur (202), dans lequel, au niveau du serveur, au moins une fonction spécifique est étudiée pour être associée au message délivré, et
- le serveur (202) étant étudié pour réaliser (140) ladite au moins une fonction sur la base dudit message reçu.

9. Terminal de données selon la revendication 8, dans lequel le terminal de données (204) est étudié pour maintenir une matrice d'image de façon à ce qu'au moins une image soit attachée à au moins un identificateur, moyennant quoi, lors de la lecture de l'identificateur, le terminal de données est étudié pour afficher l'image associée audit identificateur, ou dans lequel le terminal de données est étudié pour recevoir au moins une image du serveur et pour stocker ladite image, moyennant quoi le terminal de données est également étudié pour attacher ladite image à l'identificateur correspondant au message qu'il a délivré.

10. Serveur (202) pour exécuter une fonction, ledit serveur étant en communication avec un terminal de données (204) étudié pour lire un identificateur lisible (207a) associé à une image (206a), l'identificateur étant par exemple un identificateur RFID, un code-à-barres, un symbole lisible au moyen d'une reconnaissance de motif, d'une bande magnétique et/ou d'un code optique, et **caractérisé en ce que**
- le serveur (202) est étudié pour recevoir un message associé audit identificateur dans ledit terminal de données (204) dudit terminal de données, et dans lequel, au niveau du serveur (202), au moins une fonction spécifique est étudiée pour être associée au message délivré, et
- le serveur (202) étant étudié pour réaliser (140) ladite au moins une fonction sur la base dudit message reçu.

11. Serveur selon la revendication 10, dans lequel, une fois que le serveur (202) a reçu le message associé à l'identificateur, le serveur est étudié pour renvoyer (166) l'image qui correspond au message délivré en tant que message de retour au terminal de données qui a délivré le message pour l'affichage pour l'utilisateur.

12. Produit de logiciel informatique (300) qui est étudié pour être exécuté dans un terminal de données (204) pour l'exécution d'une fonction au niveau d'un serveur (202), lequel est étudié pour traiter un identificateur lisible (207a) associé à une image (206a), l'identificateur étant par exemple un identificateur RFID, un code-à-barres, un symbole lisible au moyen d'une reconnaissance de motif, d'une bande magnétique et/ou d'un code optique, et **caractérisé en ce que**
- le produit de logiciel informatique est en outre étudié, à partir dudit terminal de données (204), pour faire en sorte que le terminal de données délivre un message associé audit identificateur dans ledit terminal de données (204) à un serveur (202), dans lequel, au niveau du serveur, au moins une fonction spécifique est associée au message délivré et dans lequel, au niveau du serveur (202), l'au moins une fonction est réalisée (140) sur la base dudit message reçu lorsque exécuté dans le terminal de données (204).

13. Produit de logiciel informatique selon la revendication 12, dans lequel le produit de logiciel informatique est étudié pour faire en sorte que le terminal de données (204) maintienne une matrice d'image dans le terminal de données (204) de manière à ce qu'au moins une image soit attachée à au moins un identificateur moyennant quoi, lors de la lecture de l'identificateur, le produit de logiciel informatique est étudié pour faire en sorte que le terminal de données (204) affiche l'image associée audit identificateur, ou dans lequel le produit de logiciel informatique est étudié pour faire en sorte que le terminal de données (204) reçoive, en connexion avec une première utilisation de l'identificateur, au moins une image du serveur et pour stocker ladite image, moyennant quoi le produit de logiciel informatique est également étudié pour faire en sorte que le terminal de données (204) attache ladite image à l'identificateur correspondant au message qu'il a délivré.

14. Produit de logiciel informatique (400) qui est étudié pour être exécuté sur un serveur pour l'exécution d'une fonction au niveau dudit serveur (202), le serveur étant étudié pour être en communication avec un terminal de données (204) qui est étudié pour lire un identificateur lisible (207a) associé à une image (206a), l'identificateur étant par exemple un identificateur RFID, un code-à-barres, un symbole lisible au moyen d'une reconnaissance de motif, d'une bande magnétique et/ou d'un code optique, et **caractérisé en ce que**
- ledit produit de logiciel informatique étant en outre étudié, lorsque exécuté dans le serveur (202), pour faire en sorte que le serveur (202) reçoive un message associé audit identificateur dans ledit terminal de données (204) dudit terminal de données, et également pour associer au moins une fonction spécifique au message délivré, et
- le produit de logiciel informatique étant également étudié pour faire en sorte que le serveur (202) réalise (140) cette au moins une fonction sur la base dudit message reçu.

15. Produit de logiciel informatique selon la revendication 14, dans lequel, une fois que le serveur (202) a reçu le message associé à l'identificateur, le produit de logiciel informatique est étudié pour faire en sorte que le serveur (202) renvoie (166) l'image correspondant au message délivré en tant que message de retour au terminal de données (201), lequel message délivré doit être affiché pour l'utilisateur.
